# EUROPEAN PATENT APPLICATION

(11) **EP 1 744 091 A2**
(43) Date of publication of application: **17.01.2007**
(21) Application number: 06013162.0
(22) Date of filing: 26.06.2006
(51) Int. Cl.: F16L 41/00, F16L 41/08

(54) **Joint between the end of a first pipe and the wall of a second pipe**

(30) Priority: 11.07.2005 IT MN20050046
(71) Applicant: AMFAG S.p.A., 46042 Castel Goffredo (Mantova) (IT)
(72) Inventor: Bosio, Orlando, 46040 Casaloldo (Prov. of Mantova) (IT)
(74) Representative: Alagem Modiano, Lara S.

(57) **Abstract**

A joint between the end of a first pipe (2) and the wall of a second pipe (3), wherein the end of the first pipe (2) has its wall shaped according to a profile which is complementary with respect to the wall of the second pipe (3) in the joint region, so as to be able to adhere perfectly thereto along its entire extension, and is provided with at least one wing (7), which protrudes monolithically from the wall and comprises at least one through hole (7a) for accommodating a screw (8) which is adapted to enter a threaded hole provided in the wall of the second pipe (3) in order to abut at the head against the surface of the wing (7) that is directed toward the first pipe (2).

## Description

The present invention relates to a joint between the end of first pipe and the wall of a second pipe.

It is known that in many fields of technology there is the need to join two pipes so that the end of one thereof is in contact with the wall of the other.

This is the case, for example, of the field of water conveyance devices in sanitary or cooking units, which comprises spray heads or taps provided with an external enclosure which is indeed formed by a first pipe which is connected, at one end, to the wall of a second pipe at an opening through which the water supply ducts are made to pass.

Joints of the described type are currently provided mostly by means of a welding bead, with all the disadvantageous characteristics that this entails.

The aim of the present invention is to provide a joint that is extremely simple and inexpensive and is invisible if the pipes are viewed from the outside.

This aim is achieved by a joint between an end of a first pipe and a wall of a second pipe, according to the invention, characterized in that the end of the first pipe has its wall shaped according to a profile which is complementary with respect to the wall of the second pipe in the joint region, so as to be able to adhere perfectly thereto along its entire extension, and is provided with at least one wing, which protrudes monolithically from the wall and comprises at least one through hole for accommodating a screw which is adapted to enter a threaded hole provided in the wall of the second pipe in order to abut at the head against the surface of the wing that is directed toward the first pipe.

Further characteristics and advantages of the present invention will become better apparent from the description of two preferred but not exclusive embodiments thereof, illustrated by way of non-limiting example in the accompanying drawings, wherein:
Figure 1 is a perspective view of a kitchen spray head;
Figure 2 is a sectional view, taken along the line II-II of Figure 1;
Figure 3 is an exploded view of the components of the enclosure of the spray head of Figure 1;
Figure 4 is a sectional view of the enclosure of a tap.

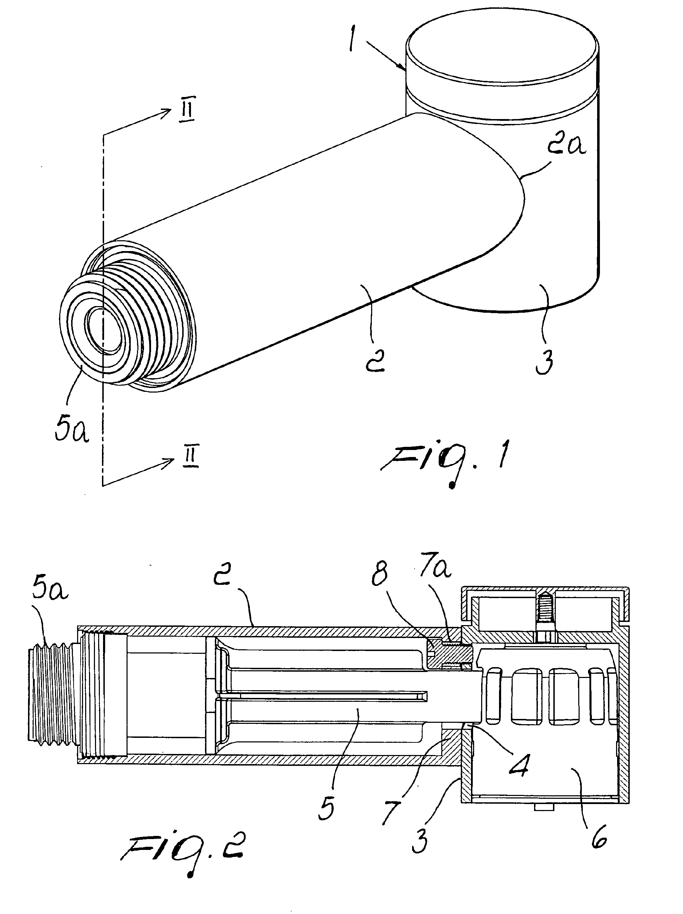

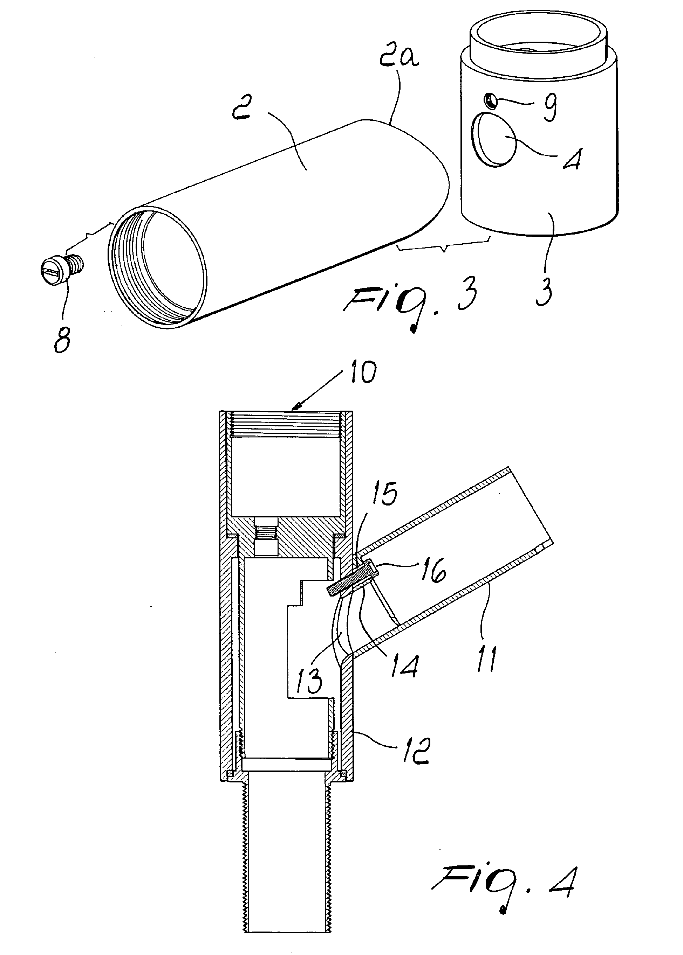

With reference to Figures 1, 2, 3, the reference numeral 1 generally designates a kitchen spray head, provided with an enclosure comprising a first pipe 2 and a second pipe 3, which are connected so that the end of the first pipe 2 is in contact with the wall of the second pipe 3 at an opening 4 through which a duct 5, for feeding water from an intake coupling 5a to a dispensing head 6, passes.

The end of the first pipe 2 has its wall contoured according to a profile 2a which is complementary with respect to the wall of the second pipe 3 in the joint region, so as to adhere perfectly thereto along its entire extension, and is provided with a wing 7, which is shaped like a circumferential protrusion that extends monolithically from said wall.

In the wing 7 a through hole 7a is provided for accommodating a screw 8, which is adapted to enter a threaded hole 9 formed in the wall of the second pipe 3, and it should be noted that the axis of the hole 9 is parallel to the axis of the first pipe 2, so as to make it particularly easy, when the spray head is assembled, to operate the screw 8 by means of a screwdriver inserted within the pipe 2.

The surface of the wing 7 against which the head of the screw 8 is meant to rest is arranged at right angles to the axis of the pipe 2, so as to offer a full abutment for said head, such as to ensure the effectiveness of the locking of the described joint.

Figure 4 is a sectional view of the enclosure of a tap, generally designated by the reference numeral 10, which comprises a first pipe 11, which is associated, at its end, with the wall of a second pipe 12 at an opening 13.

According to the invention, the end of the first pipe 11 has its wall contoured according to a profile that is complementary with respect to the wall of the second pipe 12 and is provided with a wing in the form of a localized protrusion 14, which protrudes from the wall and is provided with a through hole 15 for accommodating a screw 16, which is adapted to enter a threaded hole provided in the wall of the second pipe 12.

In this case also, the axis of the threaded hole that is designed to receive the screw 16 is parallel to the axis of the first pipe 11, and the surface of the wing 14 that is designed to abut against the head of the screw 16 is perpendicular to said axis.

The described invention is susceptible of numerous modifications and variations, all of which are within the scope of the appended claims: thus, for example, the wing can assume any shape and can comprise through holes for the passage of a plurality of screws; moreover, the at least one threaded hole provided in the wall of the second pipe may have an axis which is inclined with respect to the axis of the first pipe, and the surface of the wing against which the head of the at least one screw is designed to rest might not be arranged at right angles to the axis of said first pipe.

The disclosures in Italian Patent Application No. MN2005A000046 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A joint between an end of a first pipe and a wall of a second pipe, **characterized in that** the end of the first pipe has a wall thereof shaped according to a profile which is complementary with respect to a wall of the second pipe in a joint region, so as to be able to adhere perfectly thereto along its entire extension, and is provided with at least one wing, which protrudes monolithically from the wall and comprises at least one through hole for accommodating a screw which is adapted to enter a threaded hole provided in the wall of the second pipe in order to abut at a head against the surface of the wing that is directed toward the first pipe.

2. The joint according to claim 1, **characterized in that** the wing that protrudes monolithically from the wall at the end of the first pipe comprises at least one through hole for accommodating a screw which is adapted to enter a threaded hole provided in the wall of the second pipe with an axis which is parallel to an axis of the first pipe.

3. The joint according to claim 2, **characterized in that** in the wing that protrudes monolithically from the wall of the end of the first pipe, a surface designed for contact with the head of the at least one screw is arranged at right angles to the axis of said pipe.

4. The joint according to claim 1, **characterized in that** between the end of a first pipe and the wall of a second pipe, whose axis is perpendicular to the axis of the first pipe, the wing that protrudes monolithically from the wall at the end of the first pipe is shaped like a circumferential protrusion.

5. The joint according to claim 1, **characterized in that** the wing that protrudes monolithically from the wall at the end of the first pipe has the shape of a localized protrusion.
